# FASCICULE DE BREVET EUROPEEN

(11) **EP 3 329 809 B1**
(45) Date de publication et mention de la délivrance du brevet: **11.09.2019**
(21) Numéro de dépôt: 17204702.9
(22) Date de dépôt: 30.11.2017
(51) Int. Cl.: A47J 27/08, A47J 27/09

(54) **AUTOCUISEUR À BAIONNETTE À POIGNÉES DE CUVE ET DE COUVERCLE INTERVERROUILLABLES**
SCHNELLKOCHTOPF MIT BAJONETTVERSCHLUSS UND INEINANDERGREIFENDEN TOPF- UND DECKELGRIFFEN
BAYONET PRESSURE COOKER WITH INTERLOCKING POT AND LID HANDLES

(30) Priorité: 02.12.2016 FR 1661854
(43) Date de publication de la demande: 06.06.2018
(73) Titulaire: SEB S.A., 69130 Ecully (FR)
(72) Inventeur: CHAMEROY, Eric, 21260 VERONNES (FR); ROUSSARD, Philippe, 73340 LE NOYER (FR); RHETAT, Eric, 21000 DIJON (FR); JULIEN, Guillaume, 21000 DIJON (FR)
(74) Mandataire: Weber, Jean-François

(56) Documents cités:
- EP-A1- 3 072 423
- DE-U1- 9 401 093
- US-A1- 2014 339 223

## Description

La présente invention se rapporte au domaine technique général des appareils de cuisson d'aliments sous pression, et en particulier aux appareils domestiques du genre autocuiseurs destinés à former une enceinte de cuisson capable de monter en pression afin d'assurer la cuisson sous pression de vapeur des aliments contenus en son sein.

Le document DE 94 01 093 U montre un tel appareil de cuisson.

La présente invention concerne plus particulièrement un appareil de cuisson d'aliments sous pression comportant une cuve munie d'une poignée de cuve qui forme une excroissance locale s'étendant radialement à partir de la cuve, un couvercle indépendant de la cuve, ainsi qu'un système de verrouillage à baïonnette conçu pour passer d'une configuration de déverrouillage à une configuration de verrouillage par pivotement du couvercle relativement à la cuve selon une course angulaire prédéterminée à partir d'une position prédéterminée de pré-verrouillage du couvercle relativement à la cuve, pour amener le couvercle dans une position prédéterminée de verrouillage relativement à la cuve, ledit appareil comprenant également un élément de sécurité fixé au couvercle pour se déplacer avec ce dernier relativement à la cuve selon ladite course angulaire prédéterminée, ledit élément de sécurité coopérant en interverrouillage avec la poignée de cuve lorsque le couvercle occupe ladite position prédéterminée de verrouillage.

Les appareils de cuisson d'aliments sous pression, en particulier à usage domestique, sont bien connus. Ils comprennent généralement une cuve métallique sur laquelle est destiné à être rapporté de manière étanche, par l'intermédiaire d'une garniture souple d'étanchéité annulaire, un couvercle lui aussi métallique, de manière à constituer une enceinte de cuisson capable de monter en pression. Le couvercle est destiné à être lié à la cuve par l'intermédiaire de moyens de verrouillage permettant à l'autocuiseur d'évoluer entre une configuration de verrouillage du couvercle relativement à la cuve, dans laquelle l'enceinte de cuisson est capable de monter en pression, et une configuration de déverrouillage dans laquelle le couvercle peut être librement séparé de la cuve. Il existe différents types de moyens de verrouillage bien connus dans l'art antérieur. L'un des systèmes les plus répandus est le système de verrouillage à baïonnette, qui repose sur la mise en oeuvre de rampes de cuve et de couvercle destinées à venir en appui mutuel après rotation du couvercle pour assurer ainsi une liaison mécanique de retenue empêchant la séparation de la cuve et du couvercle sous l'effet de la montée en pression. Les rampes de couvercle sont classiquement réalisées par repliement localisé vers l'intérieur du bord tombant annulaire du couvercle, tandis que les rampes de cuve sont quant à elles obtenues classiquement par repliement et découpe du bord supérieur libre de la cuve.

Les autocuiseurs à baïonnette connus sont habituellement équipés de poignée de cuve et de couvercle qui sont décalés angulairement lorsque le couvercle est rapporté sur la cuve en vue de son verrouillage, puis parcourent une course angulaire relative prédéterminée jusqu'à venir en alignement mutuel vertical une fois la position de verrouillage atteinte. Afin de sécuriser l'utilisation de l'appareil, les poignées de cuve et de couvercle coopèrent mécaniquement lorsqu'elles sont alignées dans la position de verrouillage du couvercle relativement à la cuve pour assurer un interverrouillage entre elles, qui empêche l'utilisateur de les écarter angulairement, pour éviter toute ouverture intempestive de l'appareil lorsque ce dernier est sous pression.

Ces appareils connus donnent globalement satisfaction, mais n'en présentent pas moins différents inconvénients, notamment en matière de sécurité, de praticité et d'ergonomie.

Tout d'abord, l'utilisateur peut éprouver, avec les autocuiseurs connus, des difficultés à positionner facilement et rapidement le couvercle relativement à la cuve dans la position prédéterminée de pré-verrouillage à partir de laquelle le couvercle pourra être verrouillé par rotation du couvercle relativement à la cuve. À ce problème d'ergonomie vient s'ajouter un risque potentiel en matière de sécurité. Les autocuiseurs connus sont en effet conçus de telle façon que les rampes de cuve et de couvercle peuvent se trouver partiellement en engagement mutuel, alors que les poignées de cuve et de couvercle sont totalement ou quasiment totalement désalignées, ce qui interdit toute coopération de moyens de sécurité portés par lesdites poignées.

La conception des appareils connus pénalise donc la sécurité, qui ne peut être assurée de façon optimale dès qu'il y a possibilité d'engagement des rampes de cuve et de couvercle, c'est-à-dire dès que l'appareil est susceptible de pouvoir monter en pression.

L'invention se propose par conséquent de remédier aux différents inconvénients exposés précédemment et de proposer un nouvel appareil de cuisson d'aliments sous pression qui tout en étant léger, simple et peu coûteux à fabriquer, est d'une utilisation particulièrement facile et intuitive, tout en présentant un niveau de sécurité amélioré.

Un autre objet de l'invention vise à proposer un nouvel appareil de cuisson d'aliments sous pression de construction particulièrement simple et fiable.

Un autre objet de l'invention vise à proposer un nouvel appareil de cuisson d'aliments sous pression particulièrement sûr.

Un autre objet de l'invention vise à proposer un nouvel appareil de cuisson d'aliments sous pression très ergonomique.

Un autre objet de l'invention vise à proposer un nouvel appareil de cuisson d'aliments sous pression qui peut être commandé manuellement de façon particulièrement simple et fiable.

Un autre objet de l'invention vise à proposer un nouvel appareil de cuisson d'aliments sous pression qui facilite le bon positionnement du couvercle sur la cuve lors de l'accostage du couvercle sur la cuve en vue du verrouillage.

Un autre objet de l'invention vise à proposer un nouvel appareil de cuisson d'aliments sous pression qui permet à l'utilisateur d'identifier en un coup d'oeil si l'appareil est verrouillé ou non.

Un autre objet de l'invention vise à proposer un nouvel appareil de cuisson d'aliments sous pression particulièrement compact et robuste.

Un autre objet de l'invention vise à proposer un nouvel appareil de cuisson d'aliments sous pression dont la conception limite le risque de voir le couvercle échapper à la prise de l'utilisateur.

Les objets assignés à l'invention sont atteints à l'aide d'un appareil de cuisson d'aliments sous pression comportant une cuve munie d'une poignée de cuve qui forme une excroissance locale s'étendant radialement à partir de la cuve, un couvercle indépendant de la cuve, ainsi qu'un système de verrouillage à baïonnette conçu pour passer d'une configuration de déverrouillage à une configuration de verrouillage par pivotement du couvercle relativement à la cuve selon une course angulaire prédéterminée à partir d'une position prédéterminée de pré-verrouillage du couvercle relativement à la cuve, pour amener le couvercle dans une position prédéterminée de verrouillage relativement à la cuve, ledit appareil comprenant également un élément de sécurité fixé au couvercle pour se déplacer avec ce dernier relativement à la cuve selon ladite course angulaire prédéterminée, ledit élément de sécurité coopérant en interverrouillage avec la poignée de cuve lorsque le couvercle occupe ladite position prédéterminée de verrouillage, ledit appareil étant caractérisé en ce que ledit élément de sécurité comprend un corps principal attaché de façon fixe au couvercle, ainsi qu'un verrou monté mobile relativement audit corps principal entre :
- une première position dans laquelle ledit verrou peut engager, lorsque le couvercle occupe ladite position prédéterminée de verrouillage, une conformation complémentaire de verrouillage portée par la poignée de cuve,
- et une deuxième position dans laquelle le verrou est suffisamment écarté de ladite conformation complémentaire de verrouillage pour se dégager de cette dernière lorsque le couvercle occupe ladite position prédéterminée de verrouillage,
la totalité dudit verrou étant en correspondance radiale avec ladite poignée de cuve non seulement lorsque le couvercle occupe ladite position prédéterminée de verrouillage, mais également lorsqu'il occupe ladite position prédéterminée de pré-verrouillage.

D'autres particularités et avantages de l'invention apparaîtront et ressortiront plus en détails à la lecture de la description faite ci-après, en référence aux dessins annexés, donnés à titre d'exemples purement illustratifs et non limitatifs, dans lesquels :
- La figure 1 illustre, selon une vue en perspective schématique, un appareil de cuisson d'aliments sous pression à verrouillage à baïonnette conforme à un premier mode de réalisation de l'invention, et dont le couvercle se trouve dans une position prédéterminée de pré-verrouillage.
- La figure 2 est une vue schématique en perspective de dessous du couvercle de l'appareil de la figure 1.
- La figure 3 est une vue schématique en perspective de dessus de la cuve de l'appareil des figures 1 et 2.
- La figure 4 est une vue de dessus du couvercle de la figure 2.
- La figure 5 est une vue de côté du couvercle des figures 2 et 4.
- La figure 6 est une vue de dessus de l'appareil de la figure 1 dans sa configuration de pré-verrouillage.
- La figure 7 illustre, selon une vue en coupe, un détail de l'appareil de cuisson dans sa configuration de pré-verrouillage illustrée aux figures 1 et 6.
- La figure 8 illustre, selon une vue schématique en perspective, l'appareil de cuisson de la figure 1 dont le couvercle se trouve cette fois dans une position prédéterminée de verrouillage relativement à la cuve.
- La figure 9 illustre, selon une vue de dessus, l'appareil de la figure 8 en configuration de verrouillage.
- La figure 10 illustre, selon une vue schématique en perspective, un détail de réalisation agrandi de l'appareil des figures 8 et 9 en configuration de verrouillage.
- La figure 11 illustre, selon une vue schématique en perspective, l'appareil des figures 8 à 10 en configuration de verrouillage, dont le couvercle est représenté en transparence partielle afin de visualiser la coopération de verrouillage des rampes de cuve et de couvercle.
- La figure 12 est une vue schématique en coupe d'un détail de réalisation de l'autocuiseur des figures 8 à 11 en configuration de verrouillage.
- La figure 13 est une vue schématique en coupe d'un autre détail de réalisation de l'autocuiseur des figures 8 à 12.
- La figure 14 illustre, selon une vue schématique en perspective, un appareil de cuisson sous pression conforme à un deuxième mode de réalisation de l'invention, et dont le couvercle se trouve dans une position prédéterminée de pré-verrouillage relativement à la cuve.
- La figure 15 illustre, selon une vue de dessus, l'appareil de cuisson sous pression de la figure 14.
- La figure 16 illustre, selon une vue en schématique en perspective de dessous, le couvercle de l'appareil des figures 14 et 15.
- La figure 17 illustre, selon une vue schématique en perspective de dessus, l'appareil des figures 14 à 16 avec son couvercle dans une position prédéterminée de verrouillage relativement à la cuve.
- La figure 18 illustre, selon une vue de dessus, l'appareil de la figure 17 en configuration de verrouillage.

Comme illustré aux figures, l'invention concerne un appareil de cuisson 1 d'aliments sous pression, destiné à assurer la cuisson de différents aliments à un niveau de pression supérieur à la pression atmosphérique, en présence de vapeur, et par exemple de vapeur d'eau. Ladite vapeur est générée par le chauffage, au sein de l'appareil 1 et en présence des aliments, d'un liquide de cuisson, par exemple un liquide aqueux. L'appareil 1 selon l'invention est préférentiellement destiné à un usage domestique, étant entendu toutefois que l'invention peut également concerner des appareils professionnels ou semi-professionnels. L'appareil 1 est de préférence conçu pour monter en pression exclusivement sous l'effet d'une source de chauffe (embarquée ou externe), sans apport de pression externe. L'appareil 1 conforme à l'invention est avantageusement conçu pour être soumis à une source de chauffe externe, comme par exemple une plaque de cuisson. L'appareil 1 de cuisson d'aliments sous pression constitue donc un autocuiseur, destiné préférentiellement à être disposé sur une source de chauffe indépendante (par exemple une plaque de cuisson) pour en chauffer le contenu. L'appareil de cuisson 1 conforme à l'invention comporte au moins une cuve 2 formant récipient de cuisson, destiné à accueillir les aliments à cuire et présentant en l'espèce sensiblement une symétrie de révolution selon un axe vertical central X-X', lequel s'étend selon une direction qui s'apparente à la direction verticale lorsque l'appareil 1 est en fonctionnement normal, c'est-à-dire repose sur un plan horizontal. La cuve 2 est de manière classique fabriquée à partir d'un matériau métallique tel que l'acier inoxydable ou l'aluminium. La cuve 2 comprend un fond 2A, qui est par exemple un fond thermo-conducteur multicouches. La cuve 2 comprend également une paroi latérale annulaire 2B qui s'élève entre ledit fond 2A et un bord supérieur libre 2C, qui est en l'espèce de forme circulaire, et qui délimite une ouverture d'accès à l'intérieur de la cuve 2. La conformation de ce bord supérieur libre 2C sera décrite plus en détails dans ce qui suit, en relation avec les moyens de verrouillage de l'appareil 1. Comme illustré aux figures, la cuve 2 est munie d'au moins une poignée de cuve 3 qui forme une excroissance locale s'étendant radialement (en l'espèce relativement à l'axe central X-X') à partir de la cuve 2, et plus précisément à partir de la face externe de la paroi latérale annulaire 2B, vers l'extérieur de la cuve 2, et de préférence au voisinage du bord supérieur libre 2C. Ainsi, comme illustré aux figures, la poignée de cuve 3 est fixée à ladite cuve 2 de façon à faire saillie extérieurement de cette dernière pour former ainsi une prise destinée à être attrapée manuellement par l'utilisateur pour manipuler la cuve 2 (par exemple pour la soulever et la déplacer). Dans les modes préférentiels de réalisation illustrés aux figures, l'appareil de cuisson 1 comprend deux poignées identiques 3, 4 attachées à la paroi latérale 2B de la cuve 2 de façon diamétralement opposée par rapport à l'axe central X-X', lesdites poignées 3, 4 étant en l'espèce disposées à proximité du bord supérieur libre 2C de la cuve 2. Il est toutefois parfaitement envisageable que la cuve 2 ne soit munie que d'une seule poignée de cuve 3, ou de plus de deux poignées de cuve (par exemple trois ou quatre), sans pour autant que l'on sorte du cadre de l'invention.

L'appareil 1 conforme à l'invention comporte également un couvercle 5 destiné à être associé à la cuve 2 et verrouillé relativement à cette dernière pour former une enceinte de cuisson apte à monter en pression, c'est-à-dire une enceinte de cuisson suffisamment hermétique pour permettre la montée en pression de l'appareil 1. Afin d'obtenir ce caractère hermétique, étanche, l'appareil 1 inclut avantageusement une garniture d'étanchéité 6, formée de préférence par un joint annulaire souple, en élastomère par exemple, destinée à être interposée entre le couvercle 5 et la cuve 2, pour empêcher ainsi toute fuite incontrôlée de vapeur et/ou d'air entre l'intérieur de l'enceinte et l'extérieur. Le couvercle 5 est de manière classique fabriqué à partir d'un matériau métallique tel que l'acier inoxydable ou l'aluminium. Il présente avantageusement une forme conjuguée à celle de la cuve 2, par exemple une forme globalement discoïde, qui s'étend avantageusement dans un plan moyen sensiblement parallèle au plan moyen d'extension du fond 2A de la cuve 2 (c'est-à-dire un plan sensiblement horizontal en l'espèce) lorsqu'il est rapporté et verrouillé sur cette dernière. Comme illustré aux figures, le couvercle 5 est indépendant de la cuve 2, c'est-à-dire qu'il n'est pas attaché de façon permanente à ladite cuve 2 dont il est totalement distinct, et qu'il peut ainsi être librement associé ou séparé de la cuve 2 par l'utilisateur (en l'absence de verrouillage bien entendu). Dans les modes de réalisation illustrés aux figures, le couvercle 5 inclut un élément de couverture discoïde 5A de forme et dimensions conjuguées à celles de l'ouverture d'accès délimitée par le bord supérieur libre 2C de la paroi latérale annulaire 2B de la cuve 2.

Dans ces modes de réalisation, le couvercle 5 inclut également avantageusement une ceinture annulaire 5B, par exemple de forme sensiblement cylindrique ou tronconique, qui s'élève entre un bord supérieur circulaire solidaire de l'élément de couverture discoïde 5A (en l'espèce au niveau de la périphérie de ce dernier) et un bord inférieur circulaire libre, lequel est par exemple lui-même prolongé par une collerette terminale. Comme illustré aux figures, l'élément de couverture discoïde 5A s'étend globalement selon un plan moyen horizontal, c'est-à-dire en l'espèce parallèle au plan moyen d'extension du fond 2A de la cuve 2 lorsque le couvercle 5 est associé à la cuve 2 pour former l'enceinte de cuisson, tandis que la ceinture annulaire 5B s'étend sensiblement verticalement, c'est-à-dire parallèlement à l'axe central X-X', la collerette terminale s'étendant quant à elle sensiblement horizontalement. Cela n'exclut bien entendu aucunement que l'élément de couverture discoïde 5A puisse être, tel qu'illustré aux figures, légèrement bombé ou incurvé localement, afin par exemple d'accueillir un mécanisme de commande ou pour des raisons de tenue mécanique. Dans les modes de réalisation illustrés aux figures, la ceinture annulaire 5B est formée par un bord tombant qui s'étend vers le bas à partir de la périphérie de l'élément de couverture discoïde 5A. Dans ces modes de réalisation, le couvercle 5 est destiné à venir coiffer de façon sensiblement ajustée le sommet de la cuve 2, de sorte que la ceinture annulaire 5B entoure par l'extérieur le sommet de la paroi latérale annulaire 2B et le bord supérieur libre 2C, tandis que l'élément de couverture discoïde 5A repose en appui sur le bord libre 2C, par l'intermédiaire du joint d'étanchéité 6 interposé entre la cuve 2 et le couvercle 5. Il est cependant parfaitement envisageable que la ceinture annulaire 5B soit alternativement destinée à être insérée au sein de la cuve 2, de façon à être entourée par, et contenue dans, la cuve 2, sans pour autant que l'on sorte du cadre de l'invention.

La cuve 2 et le couvercle 5 constituent ainsi des enveloppes respectives complémentaires, de préférence métalliques, qui une fois associées forment une enveloppe métallique résultante délimitant un volume fermé au sein duquel les aliments sont destinés à cuire sous pression de vapeur. Afin de maîtriser la pression de cuisson, l'appareil 1 comprend avantageusement un moyen de régulation de pression 8, comme par exemple une soupape de régulation. Ladite soupape de régulation de pression est montée de préférence sur le couvercle 5, de façon par exemple à être portée directement par ledit couvercle 5 et agencée pour maintenir la pression régnant dans l'enceinte de cuisson à une valeur prédéterminée sensiblement constante, dite pression de fonctionnement, laquelle excède la pression atmosphérique d'une valeur qui est comprise par exemple entre sensiblement 10 et 120 kPa, ou par exemple entre 50 et 55 kPa, ou entre 85 et 90 kpa, ou qui est par exemple de l'ordre de 65 kPa, ou de l'ordre de 100 kPa. Le principe de fonctionnement général d'un tel moyen de régulation de pression est bien connu en tant que tel, de sorte qu'il n'est pas nécessaire de le décrire plus avant ici. L'appareil 1 de cuisson d'aliments sous pression comporte avantageusement d'autres organes de fonctionnement (par exemple un moyen de sécurité à l'ouverture 21 qui sera décrit plus en détails dans ce qui suit, une soupape de sécurité à la surpression, etc.).

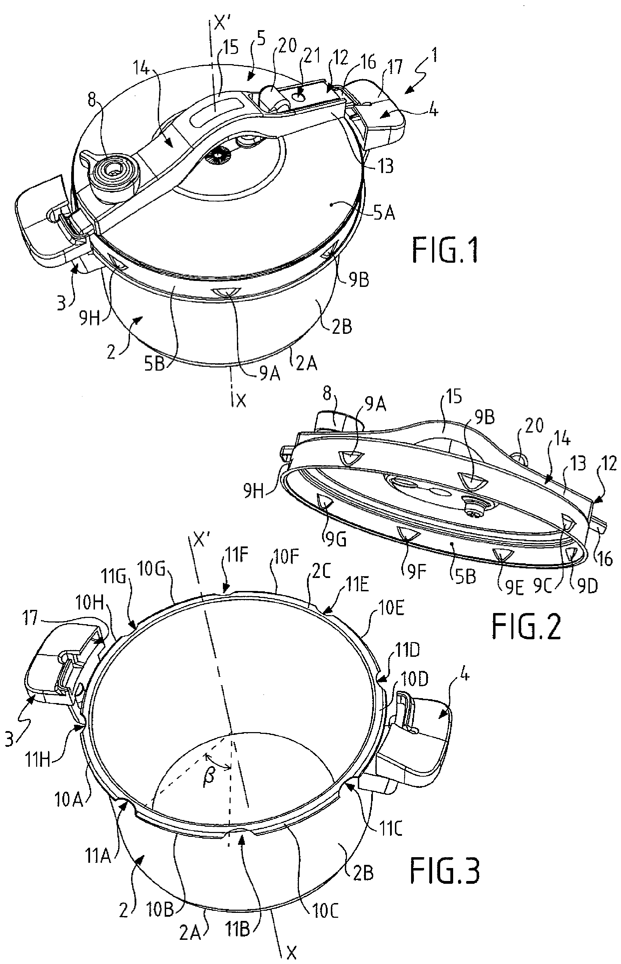

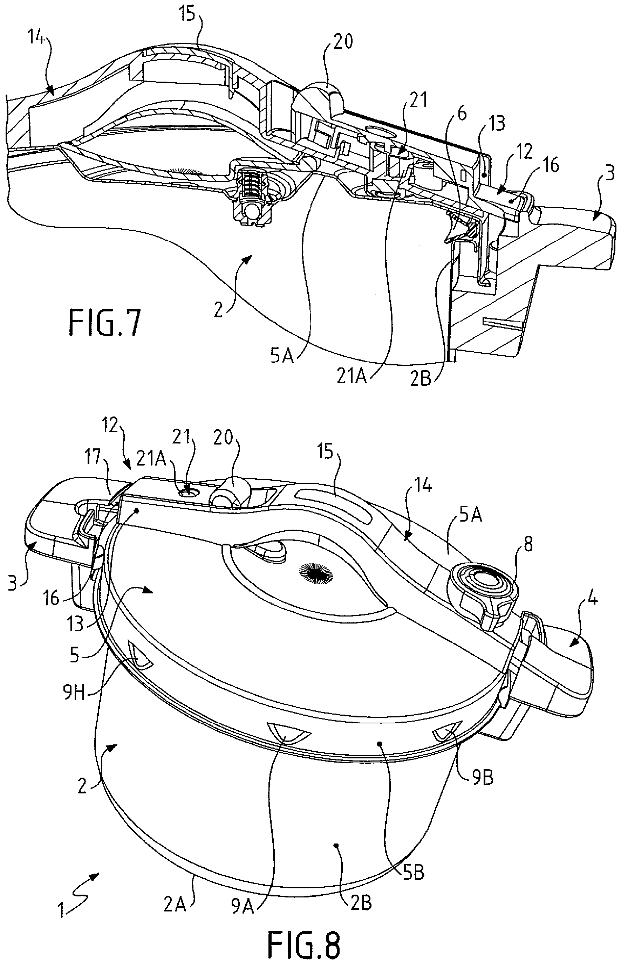

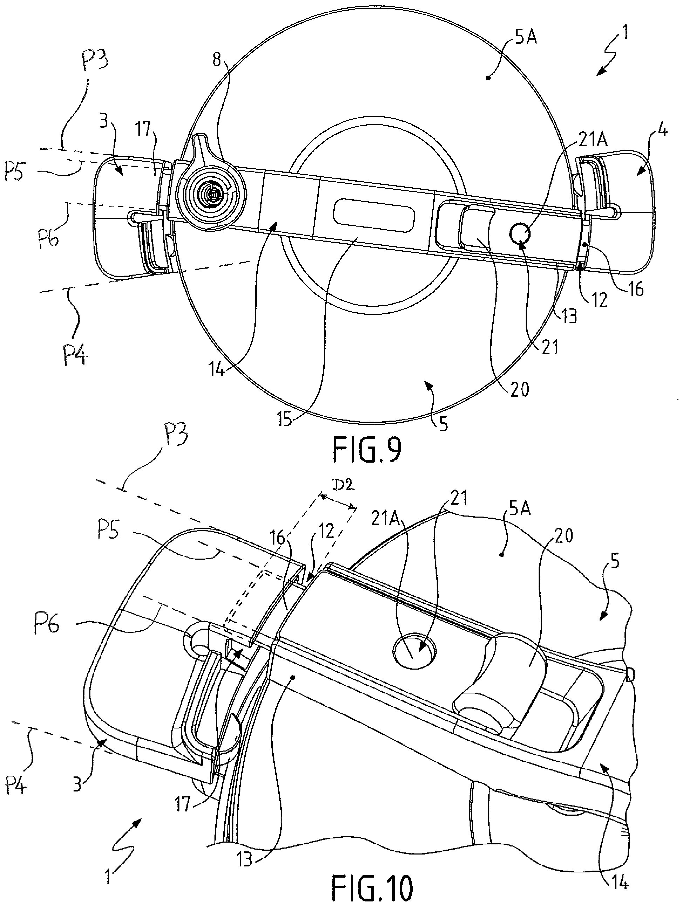

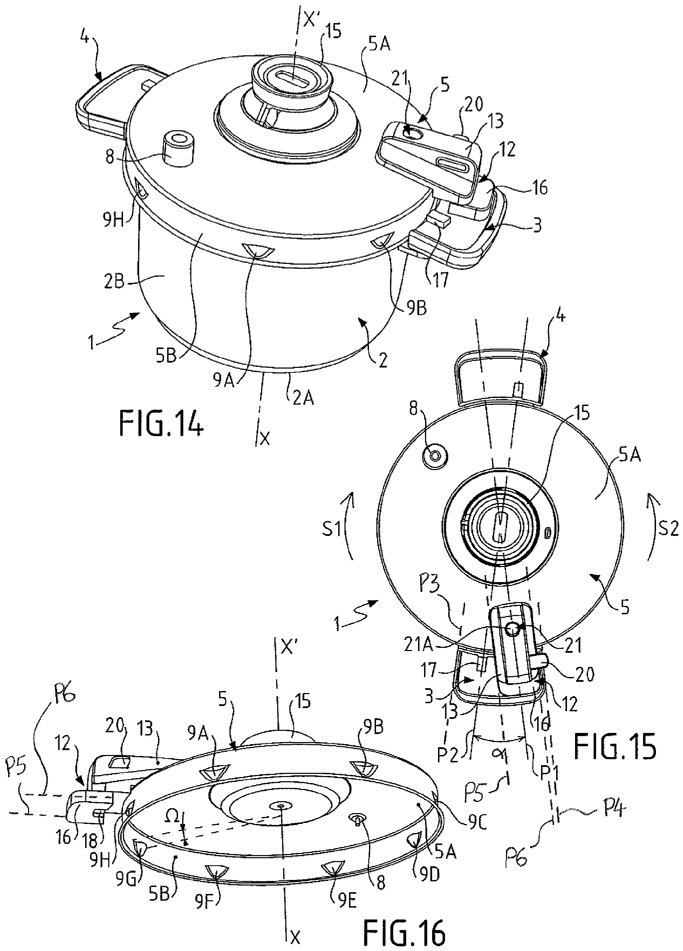

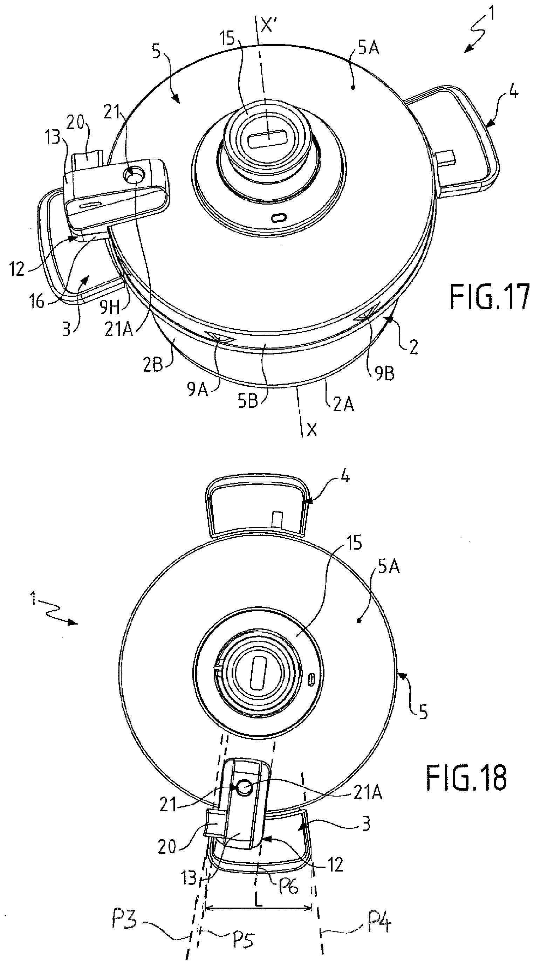

L'appareil 1 conforme à l'invention comporte également un système de verrouillage à baïonnette, afin de permettre à l'enceinte de cuisson formée par l'association du couvercle 5 et de la cuve 2 d'atteindre au moins la pression de fonctionnement susvisée sans risque de voir le couvercle 5 échapper sous l'effet de la pression régnant au sein de l'enceinte. En d'autres termes, le système de verrouillage est conçu pour assurer une liaison mécanique entre la cuve 2 et le couvercle 5 qui soit suffisamment robuste pour empêcher le couvercle 5 de se séparer de la cuve 2 sous l'effet de la montée en pression au sein de l'enceinte de cuisson. En l'espèce, le système de verrouillage à baïonnette est conçu pour passer d'une configuration de déverrouillage (illustrée aux figures 1, 6, 8,14 et 15) à une configuration de verrouillage (illustrée aux figures 8 à 10, 17 et 18) par pivotement du couvercle 5 relativement à la cuve 2, autour en l'espèce dudit axe vertical central X-X', pour faire ainsi passer l'appareil 1 d'une configuration d'attente de verrouillage, dans laquelle le couvercle 5 est rapporté sur la cuve 2 et repose librement sur cette dernière (figures 1 et 14) à une configuration de verrouillage dans laquelle la cuve 2 et le couvercle 5 interagissent pour empêcher leur libre séparation (figure 9 et 17), et inversement. La configuration de déverrouillage est avantageusement la seule configuration dans laquelle le couvercle 5 peut à la fois (i) être librement et immédiatement séparé de la cuve (sans rotation préalable) et (ii) atteindre sa configuration de verrouillage par pivotement du couvercle 5 relativement à la cuve 2. Cela signifie en particulier que dès que le système de verrouillage se trouve en dehors de la configuration de déverrouillage, alors l'une et/ou l'autre des conditions (i) et (ii) susvisées n'est pas remplie. Plus précisément, le système de verrouillage à baïonnette de l'appareil 1 selon l'invention est conçu pour passer de sa configuration de déverrouillage à sa configuration de verrouillage par pivotement du couvercle 5 relativement à la cuve 2 selon une course angulaire α prédéterminée à partir d'une position prédéterminée de pré-verrouillage du couvercle 5 relativement à la cuve 2 (illustrée aux figures 1 et 14), pour amener le couvercle 5 dans une position prédéterminée de verrouillage relativement à la cuve 2 (illustrée aux figures 9 et 17).

Ainsi, dans les modes de réalisation illustrés aux figures, l'appareil 1 passe de sa configuration d'attente de verrouillage (correspondant à la position de pré-verrouillage du couvercle 5) à sa configuration de verrouillage (correspondant à la position de verrouillage du couvercle 5) par rotation du couvercle 5 relativement à la cuve 2 selon ladite course angulaire prédéterminée α autour de l'axe central X-X', dans un sens horaire S1, et passe de sa configuration de verrouillage à sa configuration d'attente de verrouillage par rotation du couvercle 5 relativement à la cuve 2 selon ladite course angulaire prédéterminée α autour de l'axe central X-X' dans un sens antihoraire opposé S2, étant entendu que l'inverse est tout à fait possible sans que l'on sorte du cadre de l'invention (sens S1 antihoraire et sens S2 horaire). Le système de verrouillage à baïonnette de l'appareil de cuisson 1 comprend avantageusement à cet effet des première et deuxième séries d'excroissances 9A-9H, 10A-10H qui sont solidaires respectivement du couvercle 5 et de la cuve 2 et qui sont conçus, afin d'assurer le verrouillage et le déverrouillage du couvercle 5 relativement à la cuve 2, pour venir s'engager, respectivement se dégager, mutuellement par rotation du couvercle 5 relativement la cuve 2 autour de l'axe vertical central X-X' selon ladite course angulaire prédéterminée a. Comme cela est bien connu en tant que tel, les excroissances 9A-9H, 10A-10H de chacune desdites première et deuxième séries sont destinées à coopérer deux à deux, c'est-à-dire que chaque excroissance de l'une desdites séries est amenée, par rotation du couvercle 5 relativement à la cuve 2, à passer sous une excroissance correspondante de l'autre série pour verrouiller le couvercle 5 relativement la cuve 2. Dans les modes de réalisation illustrés aux figures, les excroissances 9A-9H de la première série, solidaires du couvercle 5, font saillie radialement vers l'intérieur du couvercle 5, tandis que les excroissances 10A-10H de la deuxième série, solidaires de la cuve 2, font saillie radialement à partir de la face externe de la paroi latérale 2B de la cuve 2, vers l'extérieur de cette dernière. Il est cependant parfaitement envisageable que les excroissances de verrouillage 9A-9H du couvercle fassent saillie vers l'extérieur du couvercle 5 et que les excroissances 10A-10H de cuve fassent alors saillie radialement vers l'intérieur de cette dernière. L'invention n'est donc pas limitée à une configuration particulière des rampes de verrouillage du système à baïonnette, l'essentiel étant que les excroissances de couvercle 9A-9H et de cuve 10A-10H, formant respectivement des rampes de couvercle et de cuve, coopèrent ensemble par mise en rotation relative de la cuve 2 et du couvercle 5, en l'espèce selon l'axe vertical central X-X', pour que les rampes de couvercle viennent se positionner sous les rampes de cuve afin de réaliser une liaison mécanique entre la cuve 2 et le couvercle 5 capable de résister à la pression interne régnant dans l'enceinte de cuisson. Dans les exemples illustrés aux figures, chaque excroissance 9A-9H de couvercle est constituée par un élément en volume obtenu par une déformation volumique locale de la matière constitutive de l'enveloppe du couvercle 3, et plus précisément de la ceinture annulaire 5B le long de laquelle sont de préférence disposées, à intervalles réguliers ou non, les excroissances 9A-9H. Chaque excroissance 9A-9H forme ainsi une protubérance, qui vient de matière avec la ceinture annulaire 5B et qui fait saillie de ladite ceinture annulaire en définissant d'un côté une face intérieure convexe et de l'autre côté, en « *négatif* », une face extérieure concave opposée correspondant par exemple à l'empreinte d'application d'un outil de formage, de préférence un outil d'emboutissage. L'invention n'est cependant absolument pas limitée à la mise en oeuvre d'excroissances 9A-9H spécifiques, et en particulier obtenues par emboutissage comme dans les exemples illustrés aux figures. Il est par exemple tout à fait envisageable que les excroissances 9A-9H de couvercle soient formées par des languettes plates obtenues par repliement localisé vers l'intérieur du bord libre de la ceinture annulaire 5B. Le recours à un élément en volume est toutefois préféré, car il permet d'obtenir aisément, par simple déformation de matière (emboutissage ou autre) une excroissance qui présente d'excellentes propriétés mécaniques et des dimensions réduites. Grâce à ces dimensions réduites, il est possible de faire passer l'appareil 1 de la configuration d'attente de verrouillage (position de pré-verrouillage du couvercle 5 relativement à la cuve 2) à la configuration de verrouillage (position de verrouillage du couvercle 5 relativement à la cuve 2) par rotation relative du couvercle 5 et de la cuve 2 selon une course angulaire prédéterminée α relativement faible, préférentiellement inférieure à 30°, par exemple comprise entre 10° et 25°, étant entendu que l'invention n'est pas limitée à une valeur de course angulaire α particulière, laquelle peut être supérieure ou égal à 30°, ou au contraire nettement inférieure à 30°.

Ainsi, dans les exemples illustrés aux figures, le recours à des éléments en volume emboutis permet, grâce à la taille réduite de ces derniers, de mettre en oeuvre huit rampes correspondant à une course angulaire α prédéterminée de 22°30'. Une telle valeur de course angulaire, nettement inférieure aux valeurs classiquement observées dans l'art antérieur, est de nature à améliorer l'ergonomie de manipulation de l'appareil 1 et permet aussi, comme cela ressortira plus en détails de la description qui suit, de contribuer avantageusement à la sécurité d'utilisation de l'appareil 1. Le recours à un tel élément volumique embouti pour former, par déformation locale de l'enveloppe du couvercle 5, les rampes de couvercle, permet également, pour les appareils de capacité plus importante, de recourir par exemple à dix rampes (auquel cas la course angulaire α est par exemple égale à 18°, voire à douze rampes, auquel cas la course angulaire α est par exemple égale à 15°).

Dans les exemples illustrés aux figures, les excroissances 10A-10H de cuve sont formées par un rebord annulaire qui déborde vers l'extérieur à partir du bord supérieur libre 2C, des encoches 11A-11H étant ménagées à travers ledit rebord annulaire de façon à permettre le passage desdites excroissances 9A-9H de couvercle, de sorte que les portions dudit rebord annulaire qui s'étendent entre chaque encoche 11A-11H forment les rampes de cuve respectives destinées à coopérer avec les excroissances 9A-9H de couvercle qui forment les rampes de couvercle. Ainsi, lorsque le couvercle 5 vient coiffer la cuve 2, les excroissances 9A-9H de couvercle peuvent passer par les encoches 11A-11H pour se retrouver plus bas que le rebord annulaire. L'appareil 1 se trouve alors dans sa configuration de pré-verrouillage (également appelée configuration d'attente de verrouillage), à partir de laquelle la configuration de verrouillage peut être atteinte en faisant simplement tourner le couvercle 5 relativement à la cuve 2 selon la course angulaire α prédéterminée autour de l'axe vertical X-X', ce qui a pour effet de décaler angulairement les excroissances 9A-9H du couvercle 5 et les encoches 11A-11H du rebord annulaire, réalisant un verrouillage de type « *à baïonnette* ». Avantageusement, comme illustré aux figures, chaque rampe de cuve s'étend selon un secteur angulaire β qui est bien supérieur au secteur angulaire Ω d'extension de chacune des rampes de couvercle.

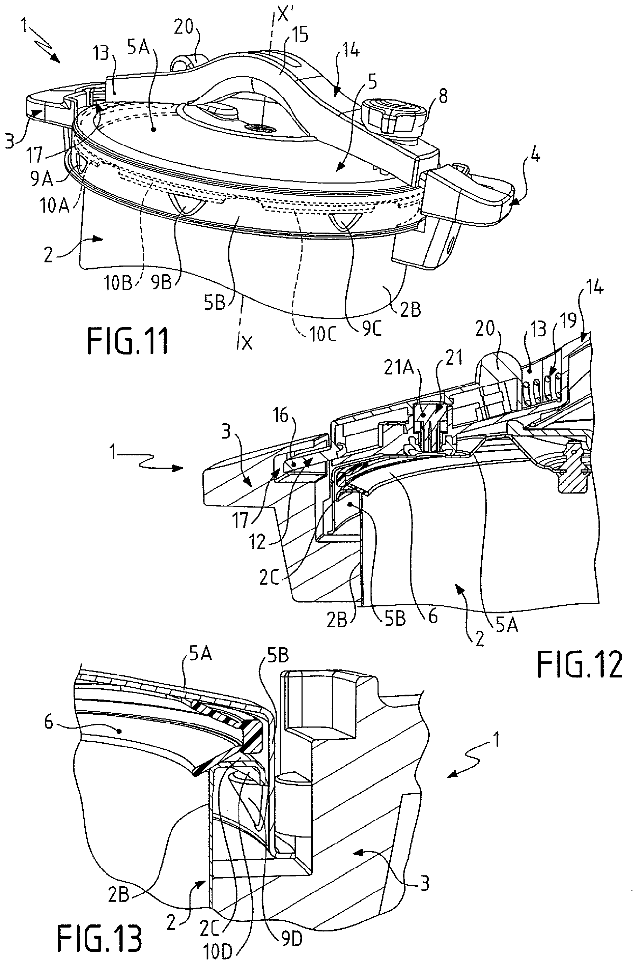

Le recours à des rampes de couvercle se présentant sous forme d'éléments volumiques obtenus par déformation localisée de l'enveloppe du couvercle 5 permet en effet de mettre en oeuvre des rampes de cuve plus larges, et donc plus solides que les rampes de cuve traditionnelles, de sorte qu'il est par exemple tout à fait possible de mettre en oeuvre un couvercle avec dix rampes de couvercle disposées à intervalles réguliers et de recourir dans ce cas à une course angulaire α réduite à 15° (et non 18°). Dans ce cas, dans la configuration de verrouillage, les milieux des rampes de couvercle ne sont pas alignés avec les milieux correspondants des rampes de cuve, c'est-à-dire que les rampes de couvercle ne sont pas positionnées de manière centrée relativement aux rampes de cuve. Dans le mode de réalisation des figures 1 à 13, les rampes de cuve et de couvercle sont respectivement au nombre de huit, mais la course angulaire α prédéterminée est inférieure à 22°30', de sorte qu'en configuration de verrouillage, et comme cela est visible à la figure 11, les rampes de couvercle ne viennent pas en appui centré contre les rampes de cuve mais sont au contraire positionnées de manière décalée sous et contre les rampes de cuve.

Conformément à l'invention, l'appareil 1 comprend également un élément de sécurité 12 fixé au couvercle 5 pour se déplacer avec ce dernier relativement à la cuve 2 selon ladite course angulaire α prédéterminée. En d'autres termes, l'élément de sécurité 12 est embarqué sur le couvercle 5 de façon à former avec ce dernier un sous-ensemble unitaire. La fixation de l'élément de sécurité 12 au couvercle 5 est assurée par des moyens permettant d'immobiliser en position l'élément de sécurité 12 relativement au couvercle 5. Ainsi, lors du pivotement du couvercle 5 relativement à la cuve 2 selon la course angulaire α pour passer de la position prédéterminée de pré-verrouillage à la position prédéterminée de verrouillage, l'élément de sécurité 12, du fait qu'il est porté par le couvercle 5, subit également un pivotement selon la même course angulaire a. Dans les exemples illustrés aux figures, l'élément de sécurité 12 est disposé sur l'élément de couverture discoïde 5A, à la périphérie de ce dernier. L'élément de sécurité 12 coopère en interverrouillage avec la poignée de cuve 3 lorsque le couvercle 5 occupe ladite position prédéterminée de verrouillage.

En d'autres termes, l'élément de sécurité 12 et la poignée de cuve 3 sont conçus pour coopérer mécaniquement, lorsque le couvercle est en position prédéterminée de verrouillage, pour s'attacher l'un à l'autre et limiter ainsi leur faculté de déplacement relatif. De préférence, ledit interverrouillage de l'élément de sécurité 12 avec la poignée de cuve 3 est un interverrouillage angulaire dans le plan horizontal perpendiculaire à l'axe central X-X', afin d'empêcher le couvercle 5 de pivoter relativement à la cuve 2 pour retourner, à partir de sa position prédéterminée de verrouillage, dans sa position de pré-verrouillage.

Comme illustré aux figures, lesdits éléments de sécurité 12 et poignées de cuve 3 sont au moins partiellement en correspondance radiale (en l'espèce relativement à l'axe central X-X') non seulement lorsque le couvercle 5 occupe ladite position prédéterminée de verrouillage, mais également lorsqu'il occupe ladite position prédéterminée de pré-verrouillage. En d'autres termes, une première portion (au moins), dudit élément de sécurité 12 et une première portion (au moins) de ladite poignée de cuve 3 sont inscrites dans un même premier plan radial P1 lorsque le couvercle 5 occupe ladite position prédéterminée de pré-verrouillage. Ledit premier plan radial P1 inclut l'axe central X-X' et est perpendiculaire au plan horizontal. Ainsi, dès lors que le couvercle 5 occupe sa position prédéterminée de pré-verrouillage, et avant même qu'il ne se retrouve dans sa position de verrouillage, l'élément de sécurité 12 se trouve au moins en partie en regard de la poignée de cuve 3, ce qui permet non seulement à l'utilisateur d'identifier facilement la position de pré-verrouillage, mais également de pouvoir mettre en oeuvre, si cela est souhaité, une coopération mécanique entre la poignée de cuve 3 et l'élément de sécurité 12 visant par exemple à interdire la montée en pression de l'appareil 1. De la même façon, ladite première portion dudit élément de sécurité 12 et une deuxième portion de ladite poignée de cuve 3 sont avantageusement inscrites dans un même deuxième plan radial P2 lorsque le couvercle 5 occupe ladite position prédéterminée de verrouillage, lesdits premier et deuxième plans radiaux P1, P2 étant sécants, tout en étant également tous deux perpendiculaires au plan horizontal et passant tous deux par l'axe central X-X'.

Ainsi, de préférence, l'élément de sécurité 12 se trouve toujours au moins en partie en alignement radial avec la poignée de cuve 3 tout au long de la course angulaire α prédéterminée du couvercle 5 entre ses positions de pré-verrouillage et de verrouillage. Le recours à une course angulaire α d'amplitude réduite, par exemple inférieure à 30° comme exposé ci-avant, s'avère particulièrement avantageux en permettant de minimiser l'amplitude du secteur angulaire selon lequel s'étend la poignée de cuve 3, c'est-à-dire de minimiser la largeur L de ladite poignée de cuve 3. Dans les modes de réalisation particulièrement avantageux illustrés aux figures, le recours à des rampes de couvercle se présentant sous la forme d'éléments volumiques locaux s'avère particulièrement avantageux puisque la valeur de la course angulaire α prédéterminée conditionne la largeur L de la poignée de cuve 3 afin de faire coïncider radialement, et au moins partiellement, l'élément de sécurité 12 et la poignée de cuve 3 dès lors que le couvercle est en position prédéterminée de pré-verrouillage.

Dans les modes de réalisation illustrés aux figures, l'élément de sécurité 12 est conçu pour adopter une configuration dans laquelle il déborde radialement au moins en partie du couvercle 2, de façon à venir surplomber au moins partiellement la poignée de cuve 3 lorsque le couvercle 5 occupe la position prédéterminée de pré-verrouillage. Cela signifie que dans ce mode de réalisation, qui correspond aux exemples illustrés aux figures, une partie au moins de l'élément de sécurité 12 est alignée verticalement avec une partie au moins de la poignée de cuve 3 lorsque le couvercle 5 occupe sa position prédéterminée de pré-verrouillage. Cet alignement vertical peut être tel que, comme illustré aux figures, la portion concernée de l'élément de sécurité 12 se trouve au-dessus de la portion concernée de la poignée de cuve 3, étant entendu qu'il est tout à fait envisageable de mettre en oeuvre une configuration inverse où la portion concernée de l'élément de sécurité 12 se trouve en dessous de la portion concernée de la poignée de cuve 3. De façon préférentielle, et comme illustré aux figures, l'élément de sécurité 12 surplombe au moins partiellement la poignée de cuve 3 non seulement lorsque le couvercle 5 occupe ladite position prédéterminée de verrouillage, afin de permettre la coopération d'interverrouillage de la poignée de cuve 3 avec l'élément de sécurité 12, mais également lorsqu'il occupe ladite position prédéterminée de pré-verrouillage.

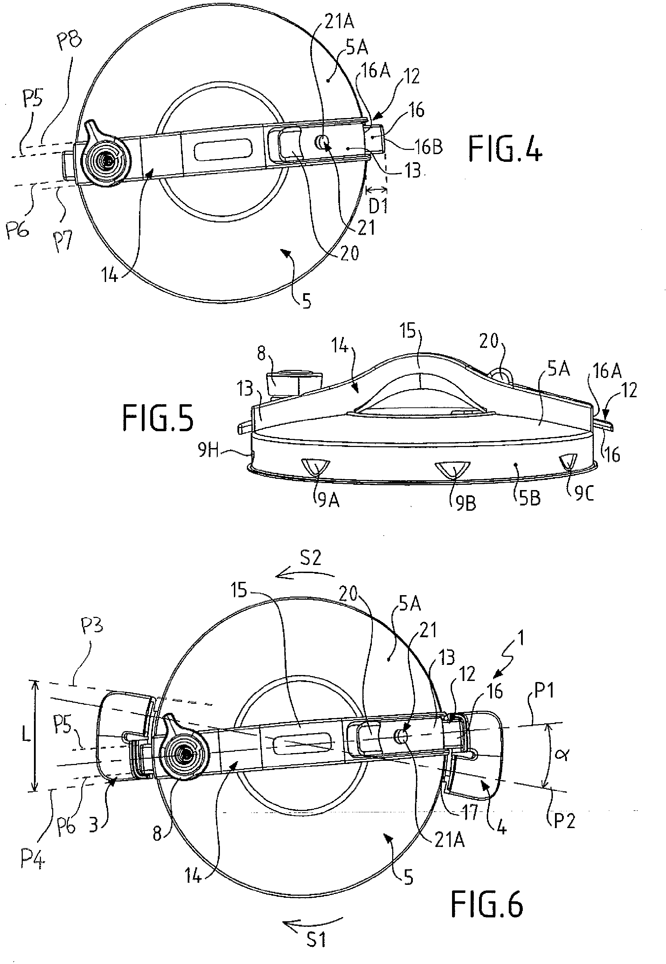

De préférence, ladite coopération d'interverrouillage de l'élément de sécurité 12 avec ladite poignée de cuve 3 est une coopération mâle/femelle, lesdits éléments de sécurité 12 et poignée de cuve 3 présentant respectivement une conformation femelle et une conformation mâle complémentaire, ou inversement (c'est-à-dire que l'élément de sécurité 12 présente la conformation mâle tandis que la poignée de cuve 3 présente la conformation femelle). Ainsi, dans ce mode de réalisation préférentiel, une partie au moins de l'élément de sécurité 12 est conçu pour s'emboîter avec une partie correspondante de la poignée de cuve 3 (ou du moins avec un élément complémentaire porté par ladite poignée de cuve 3) pour assurer l'interverrouillage de la poignée de cuve 3 avec l'élément de sécurité 12, en vue d'empêcher tout pivotement du couvercle 5 relativement à la cuve 2 dans le plan horizontal susceptible d'amener le couvercle 5 hors de sa position prédéterminée de verrouillage. Comme illustré aux figures, l'élément de sécurité 12 comprend un corps principal 13 attaché de façon fixe au couvercle 5, c'est-à-dire que le corps principal 13 est directement relié au couvercle 5 de façon à être immobilisé relativement à ce dernier, au moyen par exemple d'une liaison de type encastrement. Dans le premier mode de réalisation illustré aux figures 1 à 13, le corps principal 13 se présente sous la forme d'une portion extrêmale d'une traverse 14 en matière plastique qui recouvre localement l'élément de couverture discoïde 5A selon un diamètre de ce dernier. La traverse 14 en question s'étend ainsi longitudinalement entre deux extrémités diamétralement opposées qui affleurent sensiblement le bord du couvercle 5, de préférence sans déborder radialement de ce dernier (cf. figure 5). Dans le deuxième mode de réalisation des figures 14 à 18, le corps principal 13 est cette fois formé non pas par une traverse qui s'étend sur tout un diamètre du couvercle 5 sans déborder radialement de ce dernier, mais en l'espèce par un bloc distinct du couvercle 5 et disposé à la périphérie du couvercle 5, sur l'élément de couverture discoïde 5A, ledit bloc débordant radialement vers l'extérieur du couvercle 5 comme cela est en particulier visible à la figure 16. Le bloc formant le corps principal 13 de l'appareil des figures 14 à 18 est réalisé, tout comme la traverse 14, de préférence en matière plastique, et est attaché de façon fixe à l'élément de couverture discoïde 5A.

Avantageusement, l'appareil 1 comprend également un organe de préhension 15 qui est attaché de façon fixe au couvercle 5 et est conçu pour être saisi manuellement afin de permettre la manipulation et le transport du couvercle 5 par son intermédiaire, et en particulier le pivotement du couvercle 5 relativement à la cuve 2 selon ladite course angulaire α prédéterminée. De préférence, et conformément au premier mode de réalisation des figures 1 à 13, le corps principal 13 vient de matière avec ledit organe de préhension 15. Plus précisément, dans le mode de réalisation illustré aux figures 1 à 13, la traverse 14 présente une conformation incurvée en son centre destinée à former l'organe de préhension 15, lequel forme donc, avec le corps principal 13 (qui correspond à l'une des extrémités de la traverse 14), une seule et même pièce d'un seul tenant. Il est cependant parfaitement envisageable, sans pour autant que l'on sorte du cadre de l'invention, que l'organe de préhension 15 soit totalement distinct du corps principal 13, conformément par exemple au mode de réalisation des figures 14 à 18. Dans ce mode de réalisation, l'organe de préhension 15 est formé par un pommeau central qui s'élève sensiblement à partir du centre de l'élément de couverture discoïde 5A et qui est totalement distinct et indépendant du corps principal 13.

Comme illustré aux figures 1 à 18, l'élément de sécurité 12 comprend, outre le corps principal 13, un verrou 16 monté mobile relativement audit corps principal 13 entre :
- une première position dans laquelle le verrou 16 peut engager, lorsque le couvercle 5 occupe ladite position prédéterminée de verrouillage, une conformation complémentaire 17 de verrouillage portée par la poignée de cuve 3,
- et une deuxième position dans laquelle le verrou 16 est suffisamment écarté de ladite conformation complémentaire 17 de verrouillage pour se dégager de cette dernière lorsque le couvercle 5 occupe ladite position prédéterminée de verrouillage.

Comme illustré, la totalité du verrou 16 est en correspondance radiale avec la poignée de cuve 3 non seulement lorsque le couvercle 5 occupe ladite position prédéterminée de verrouillage, mais également lorsqu'il occupe ladite position prédéterminée de pré-verrouillage. Ainsi, le verrou 16 se trouve toujours dans son intégralité en alignement radial avec une portion de la poignée de cuve 3 tout au long de la course angulaire α prédéterminée du couvercle 5 entre ses positions de pré-verrouillage et de verrouillage. Grâce à cette correspondance radiale du verrou 16 avec la poignée de cuve 3, l'utilisation de l'appareil est facilitée et son niveau de sécurité amélioré.

Dans les modes de réalisation illustrés aux figures, lorsqu'il occupe sa première position, le verrou 16 surplombe au moins partiellement la poignée de cuve 3 lorsque le couvercle 5 occupe ladite position prédéterminée de pré-verrouillage. Plus précisément, la totalité du verrou 16, lorsqu'il occupe sa première position, surplombe (en l'occurrence localement) la poignée de cuve 3, c'est à dire surplombe au moins une partie de la poignée de cuve 3, lorsque le couvercle 5 occupe ladite position prédéterminée de pré-verrouillage, mais également lorsqu'il occupe sa position prédéterminée de verrouillage. En d'autres termes, au moins une partie de la projection orthogonale de la poignée de cuve 3 sur un plan horizontal perpendiculaire à l'axe vertical central X-X' se superpose totalement à l'intégralité de la projection orthogonale du verrou 16 lorsque le couvercle 5 occupe ladite position prédéterminée de pré-verrouillage et/ou ladite position prédéterminée de verrouillage.

Comme illustré aux figures, ladite poignée de cuve 3 s'étend entre des premier et deuxième plans verticaux P3, P4, qui délimitent en l'occurrence le secteur angulaire du plan horizontal moyen dans lequel s'étend la poignée de cuve 3 le long de la face externe de la paroi latérale de la cuve 2. Le verrou 16 s'étend lui aussi entre lesdits premier et deuxième plans verticaux P3, P4 non seulement lorsque le couvercle 5 occupe ladite position prédéterminée de verrouillage, mais également lorsque ledit couvercle 5 occupe ladite position prédéterminée de pré-verrouillage.

Le verrou 16 s'étend lui-même de préférence entre des troisième et quatrième plans verticaux P5, P6, qui délimitent latéralement ledit verrou 16. Comme cela ressort des figures, chacun desdits troisième et quatrième plans verticaux P5, P6 croise la poignée de cuve 3 non seulement lorsque ledit couvercle 5 occupe ladite position prédéterminée de verrouillage, mais également lorsque ledit couvercle 5 occupe ladite position prédéterminée de pré-verrouillage. Ainsi, comme illustré aux figures, les troisième et quatrième plans verticaux P5, P6 s'étendent entre lesdits premier et deuxième plans verticaux P3, P4, que le couvercle 5 occupe sa position de pré-verrouillage ou sa position de verrouillage.

Avantageusement, et comme illustré, la totalité du corps principal 13 est également en correspondance radiale avec ladite poignée de cuve 3, non seulement lorsque le couvercle 5 occupe ladite position prédéterminée de verrouillage, mais également lorsqu'il occupe ladite position prédéterminée de pré-verrouillage. Cela signifie par exemple que le corps principal 13, qui forme par exemple une poignée ou un module de couvercle, s'étend latéralement entre des cinquième et sixième plans verticaux P7, P8 qui s'étendent entre lesdits premier et deuxième plans verticaux P3, P4, que le couvercle 5 occupe sa position de pré-verrouillage ou sa position de verrouillage.

Avantageusement, et comme illustré aux figures, ladite première position du verrou 16 est une position déployée dans laquelle une portion au moins dudit verrou 16 déborde radialement dudit couvercle 5, et de préférence également du corps principal 13 (de façon visible), pour engager ladite conformation complémentaire 17 de verrouillage, tandis que ladite deuxième position est une position escamotée dans laquelle ladite portion du verrou 16 est rétractée vers l'intérieur du couvercle 5 et/ou vers l'intérieur du corps principal 13, pour se dégager de ladite conformation complémentaire 17 de verrouillage.

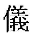 vantageusement, le verrou 16 est monté à coulissement, et de façon encore plus préférentielle à coulissement radial, relativement au corps principal 13, conformément aux modes de réalisation illustrés aux figures, étant entendu que l'invention n'est toutefois pas limitée à un montage à coulissement et que d'autres types de liaison mécanique (à pivotement par exemple) peuvent être mis en oeuvre entre le corps principal 13 et le verrou 16.

Dans le premier mode de réalisation illustré aux figures 1 à 13, le verrou 16 se présente sous la forme d'une languette qui dans la position déployée fait saillie radialement sur une distance D1 à partir du couvercle 5 (cf. figure 4) tandis que dans la position rétractée ladite languette ne fait soit sensiblement pas saillie radialement vers l'extérieur du couvercle 5, soit fait saillie radialement vers l'extérieur du couvercle 5 sur une distance D2 qui est inférieure à la distance D1.

Dans le deuxième mode de réalisation des figures 14 à 18, le verrou 16 se présente avantageusement sous la forme d'un curseur en forme de plaquette monté contre et sous le corps principal 13 entre une position rétractée dans laquelle le curseur en question ne déborde pas radialement vers l'extérieur du corps principal 13, et une position déployée dans laquelle il déborde au contraire radialement vers l'extérieur dudit corps principal 13.

Dans le premier mode de réalisation des figures 1 à 13, le verrou 16, dans sa première position (qui est avantageusement une position déployée) s'étend de préférence longitudinalement entre une extrémité intérieure 16A au contact du corps principal 13 et une extrémité extérieure libre 16B, ladite conformation complémentaire 17 formant quant à elle avantageusement un logement, c'est-à-dire une cavité, destinée à recevoir en son sein ladite extrémité extérieure libre 16B lorsque lesdits verrou 16 et couvercle 5 occupent respectivement lesdites première position (position déployée) et position prédéterminée de verrouillage. Ainsi, dans la configuration de verrouillage de l'appareil 1, une portion extrêmale libre du verrou 16 est capturée dans le logement solidaire de la poignée de cuve 3 pour empêcher tout retour intempestif du couvercle 5 dans sa position prédéterminée de déverrouillage à partir de sa position prédéterminée de verrouillage.

Dans le deuxième mode de réalisation des figures 14 à 18, la conformation complémentaire 17 forme cette fois non pas un logement mais une protubérance de blocage qui fait saillie à la surface de la poignée de cuve 3. Dans ce cas, la poignée de cuve 3 présente par exemple une surface supérieure sensiblement plane pourvue d'un ergot qui s'élève verticalement à partir de ladite surface plane pour former ladite protubérance de blocage. Dans ce mode de réalisation, le verrou 16 forme quant à lui un logement 18 destiné à recevoir la protubérance de blocage lorsque lesdits verrou 16 et couvercle 5 occupent respectivement lesdites première position (position qui est en l'espèce une position rétractée) et position prédéterminée de verrouillage.

Ainsi, une fois le couvercle 5 en position prédéterminée de verrouillage avec le verrou 16 dans sa première position où il engage la conformation complémentaire 17, il est impossible pour l'utilisateur, du fait de la coopération mécanique verrou 16/conformation complémentaire 17, de faire pivoter le couvercle 5 pour qu'il quitte sa position prédéterminée de verrouillage et retourne dans sa position prédéterminée de pré-verrouillage. Cela permet d'éviter toute tentative de déverrouillage intempestif qui pourrait mettre en danger l'utilisateur.

Il existe bien entendu une multitude de possibilités pour contrôler la position du verrou 16, qu'il s'agisse d'un contrôle purement manuel, semi-automatique ou totalement automatique.

Par exemple, l'élément de sécurité 12 comprend un moyen de rappel élastique 19 interposé entre lesdits corps principal 13 et verrou 16 pour rappeler en permanence le verrou 16 dans sa première position, qui est de préférence la position déployée évoquée précédemment, ou pour rappeler en permanence ledit verrou dans sa deuxième position (qui est de préférence la position escamotée évoquée précédemment). De préférence, ledit moyen de rappel élastique 19 comprend un ressort hélicoïdal, étant entendu que l'invention n'est pas limitée à un moyen de rappel élastique particulier et que tout corps élastique approprié peut convenir en fonction de la conception retenue. Dans ce mode de réalisation préférentiel, le verrou 16 tend à occuper sa position déployée en permanence sous l'effet du rappel élastique auquel il est soumis, et rejoint sa position escamotée par exemple sous l'effet de l'exercice par l'utilisateur d'un effort de commande directe opposé à la force de rappel élastique. Par exemple, l'élément de sécurité 12 comprend un organe de commande 20 activable manuellement et de préférence accessible tant en configuration de déverrouillage qu'en configuration de verrouillage. Comme illustré, l'organe de commande 20 est déplaçable manuellement relativement au corps principal 13 pour commander manuellement le déplacement du verrou 16 de sa première à sa deuxième position et/ou de sa deuxième à sa première position. L'organe de commande 20 est par exemple directement solidaire du verrou 16, et porte avantageusement ce dernier comme dans le mode de réalisation illustré aux figures 1 à 13 selon lequel l'organe de commande 20 et le verrou 16 sont formés par une seule et même pièce d'un seul tenant. Dans ce cas, l'organe de commande 20 peut être utilisé par l'utilisateur pour repousser le verrou 16 dans sa position escamotée, à l'encontre de la force de rappel élastique exercé par le moyen de rappel élastique 19. Le fonctionnement de cette variante de l'appareil 1 peut par exemple être le suivant :
- Le verrou 16 se trouve naturellement en position déployée sous l'effet de la force de rappel exercée par le ressort formant le moyen de rappel 19.
- Le couvercle 5 est placé dans sa position prédéterminée de pré-verrouillage, avec le verrou 16 en position déployée qui surplombe partiellement la poignée de cuve 3.
- Puis l'utilisateur fait pivoter, au moyen de l'organe de préhension 15, le couvercle 5 de sa position prédéterminée de pré-verrouillage à sa position prédéterminée de verrouillage tout en exerçant, lorsque le couvercle 5 arrive au voisinage de sa position de pré-verrouillage, un effort de commande sur l'organe de commande 20 pour commander manuellement le déplacement du verrou dans sa deuxième position (position escamotée) afin d'amener le couvercle 5 jusque dans sa position de verrouillage sans que le verrou 16 ne bloque le mouvement en venant buter contre la paroi latérale du logement porté par la poignée de cuve 3.
- Puis une fois le couvercle 5 arrivé en position de verrouillage, l'utilisateur peut relâcher son effort sur l'organe de commande 20 ce qui entraînera le rappel élastique du verrou 16 dans sa position déployée, de sorte que la portion extrêmale libre du verrou 16 se retrouvera capturée dans le logement formant conformation complémentaire 17 de verrouillage porté par la poignée de cuve 3.
- Par la suite, pour déverrouiller le couvercle si les conditions de sécurité (niveau de pression) le permettent, l'utilisateur exercera tout d'abord un effort sur l'organe de commande 20 pour ramener le verrou 16 dans sa position escamotée à l'encontre de la force de rappel élastique exercé par le moyen 19, puis décalera angulairement, grâce à l'organe de préhension 15, le couvercle 5 hors de sa position prédéterminée de verrouillage.

L'invention n'est toutefois pas limitée à ce mode de réalisation particulier. Il est par exemple tout à fait envisageable, sans pour autant que l'on sorte du cadre de l'invention, que l'élément de sécurité 12 n'inclut pas de moyen de rappel élastique 19, auquel cas l'organe de commande 20 peut être utilisé pour déplacer le verrou 16 de sa première à sa deuxième position et de sa deuxième à sa première position (alors que dans le mode de réalisation des figures 1 à 13 l'organe de commande 20 n'assure pas directement le déplacement du verrou 16 de sa deuxième à sa première position, ce déplacement étant plus directement assuré par le moyen de rappel élastique 19). Il est également parfaitement envisageable, sans pour autant que l'on sorte du cadre de l'invention, que le verrou 16 ne soit pas directement porté par l'organe de commande 20, comme dans l'exemple des figures 1 à 13, mais que l'organe de commande 20 soit déplaçable manuellement non seulement relativement au corps principal 13, mais également relativement au verrou 16, lequel peut être dans ce cas avantageusement soumis directement à l'effort de rappel élastique exercé par le moyen de rappel élastique 19. Dans ce dernier mode de réalisation particulier, l'élément de sécurité 12 peut inclure un organe de blocage qui bloque le verrou 16 dans sa deuxième position, à l'encontre de la force de rappel exercé par le moyen de rappel élastique 19. Dans ce cas, l'organe de commande 20 est utilisé pour déplacer le moyen de blocage en question afin qu'il s'efface et permette ainsi au verrou 16 de regagner automatiquement, sous l'effet de l'effort de rappel élastique, sa première position. Il est par ailleurs envisageable que le moyen de rappel élastique rappelle le verrou 16 non pas dans sa première position mais plutôt dans sa deuxième position, l'ensemble des variantes alternatives envisagées ci-avant restant applicable *mutatis mutandis*.

Dans le mode de réalisation des figures 14 à 18, l'organe de commande 20 permet par exemple non seulement de commander manuellement et positivement le déplacement du verrou 16 de sa première position (position escamotée) à sa deuxième position (position déployée) mais il permet avantageusement également de commander le déplacement du verrou 16 de sa deuxième position (position déployée) à sa première position (position escamotée). Il est également tout à fait envisageable dans ce mode de réalisation de mettre en oeuvre un moyen de rappel élastique interposé entre les corps principal 13 et verrou 16 pour rappeler en permanence le verrou 16 soit dans sa première position, soit dans sa deuxième position. Toutes les variantes envisagées précédemment en relation avec le premier mode de réalisation des figures 1 à 13 sont là encore tout à fait applicables à ce deuxième mode de réalisation des figures 14 à 18.

Il est par ailleurs envisageable que le passage du couvercle 5 de sa position prédéterminée de pré-verrouillage à sa position prédéterminée de verrouillage entraîne automatiquement et provisoirement le verrou 16 dans sa deuxième position et/ou dans sa première position. Par exemple, dans le premier mode de réalisation des figures 1 à 13, la poignée de couvercle 3 peut-être avantageusement pourvu d'une surface de came qui vient coopérer avec une surface de came complémentaire du verrou 16 pour que ce dernier soit repoussé dans sa deuxième position sous l'effet de la rotation du couvercle 5 de sa position prédéterminée de pré-verrouillage vers sa position prédéterminée de verrouillage, le verrou 16 revenant automatiquement, sous l'effet du moyen de rappel élastique 19, dans sa première position une fois passée la surface de came de la poignée de cuve 3, de façon à se retrouver capturé dans le logement formant conformation complémentaire 17.

L'inverse n'est en revanche pas possible et l'utilisateur doit exercer un effort positif sur l'organe de commande 20 pour déverrouiller le couvercle 5. Dans le mode de réalisation des figures 14 à 18, le verrou 16 est par exemple repoussé en permanence dans sa position déployée (qui correspond à la deuxième position du verrou 16), sous l'effet du rappel élastique auquel il est en permanence soumis. La poignée de cuve 3 est avantageusement pourvue d'une surface de came conçue pour coopérer avec une surface de came complémentaire portée par le verrou 16 pour repousser ce dernier, sous l'effet du pivotement du couvercle 5 de sa position prédéterminée de pré-verrouillage à sa position préterminée de verrouillage, dans sa position escamotée où le logement 18 portée par le verrou 16 peut venir capturer la protubérance formant conformation complémentaire 17 portée par la poignée de cuve 3. Il est également possible, dans ce mode de réalisation des figures 14 à 18, que le verrou 16 soit soumis en permanence à une force de rappel élastique qui a tendance à le maintenir dans sa première position (position escamotée). Dans ce cas, l'élément de sécurité 12 peut comprendre avantageusement un organe de blocage déplaçable entre une position de blocage dans laquelle le moyen de blocage maintient le verrou 16 dans sa deuxième position à l'encontre de la force de rappel élastique, et une position de libération dans laquelle le moyen de blocage s'efface pour laisser le verrou 16 retourner dans sa première position sous l'effet de la force de rappel élastique. L'organe de commande 20 commande avantageusement dans ce cas le passage de l'organe de blocage de sa position de blocage à sa position de libération. Il est également possible que le passage du moyen de blocage de sa position de blocage à sa position de libération soit commandé automatiquement par la coopération de surfaces de cames portées respectivement par la poignée de cuve 3 et l'élément de sécurité 12, auquel cas l'organe de commande 20 peut cette fois être utilisé pour réarmer le mécanisme, c'est-à-dire repousser le verrou 16 dans sa position déployée (deuxième position), si bien entendu les conditions de sécurité (niveau de pression) le permettent.

L'organe de commande 20 pourra se présenter sous toute forme appropriée, et pourra être de préférence monté à coulissement relativement au corps principal 13, que ce soit selon une direction radiale (mode de réalisation des figures 1 à 13) ou selon une direction tangentielle (mode de réalisation des figures 14 à 18). L'organe de commande 20 se présente par exemple sous la forme d'un poussoir, d'un levier, d'une tirette, d'un curseur, d'un bouton... ou tout autre conception appropriée.

De préférence, afin de procurer une sécurité d'utilisation optimale, l'appareil 1 comprend un moyen de sécurité à l'ouverture 21 susceptible d'évoluer, sous l'effet du niveau de pression régnant dans l'appareil 1 (c'est-à-dire dans l'enceinte de cuisson), entre une configuration de libération, dans laquelle il autorise le déverrouillage du couvercle 5 relativement à la cuve 2, et une configuration de blocage, dans laquelle il interdit le déverrouillage du couvercle 5 relativement à la cuve 2. A cette fin, le moyen de sécurité 21 comprend un élément 21A mobile entre une position de sécurité dans laquelle il bloque le verrou 16 dans sa première position et une position neutre dans laquelle il n'interfère pas avec le verrou 16 pour autoriser ce dernier à atteindre sa deuxième position à partir de sa première position. L'élément 21A est avantageusement embarqué au sein du corps principal 13. De préférence, la position neutre est une position de fuite dans laquelle le moyen de sécurité 21 met en communication l'intérieur de l'enceinte avec l'extérieur, tandis que la position de blocage est une position étanche dans laquelle le moyen de sécurité 21 ne met pas en communication l'intérieur de l'enceinte de cuisson avec l'extérieur ce qui permet la montée en pression de l'enceinte. Par exemple, l'élément 21A est monté à coulissement vertical entre une position haute (correspondant à la position de sécurité) dans laquelle il est repoussé dès lors que la pression au sein de l'appareil 1 atteint un niveau prédéterminé, et une position basse (correspondant à la position neutre) dans laquelle il est maintenu sous l'effet de son propre poids, tant que la pression au sein de l'appareil 1 n'atteint pas ledit niveau prédéterminé. De préférence, dans sa position haute, l'élément 21A, qui se présente par exemple sous la forme d'un doigt de sécurité, est capable de coopérer, directement ou indirectement, avec le verrou 16 pour empêcher ce dernier de quitter sa première position dans laquelle il engage la conformation complémentaire 17. Par exemple, dans le mode de réalisation des figures 1 à 13, le doigt 21A, lorsqu'il est en position haute, vient se loger dans une conformation complémentaire de l'organe de commande 20 qui porte le verrou 16 (cf. figure 12), empêchant ainsi le déplacement de l'organe de commande 20 et donc du verrou 16. Il est cependant tout à fait envisageable, sans pour autant que l'on sorte du cadre de l'invention, que le doigt de sécurité 21A coopère directement avec le verrou 16.

Une lumière est par ailleurs avantageusement ménagée dans le corps de l'organe de commande 20, afin que le sommet du doigt de sécurité 21A soit visible lorsqu'il est en position haute, permettant ainsi d'indiquer visuellement à l'utilisateur l'état de fonctionnement de l'appareil 1. Le moyen de sécurité 21 forme ainsi un moyen de sécurité à l'ouverture, qui empêche toute ouverture intempestive lorsque l'appareil 1 est sous pression.

Avantageusement, lorsque le verrou 16 se trouve dans sa deuxième position, il coopère avec le moyen de sécurité 21 pour empêcher ce dernier de rejoindre sa configuration de blocage à partir de sa configuration de libération. Cette fonctionnalité de sécurité à la mauvaise fermeture, qui empêche l'appareil 1 de monter en pression tant que le verrou 16 n'est pas dûment dans sa première position, peut par exemple être mis en oeuvre au moyen d'un orifice ménagé à travers l'organe de commande 20 et dont les dimensions sont sensiblement ajustées à celle du doigt 21A, de telle sorte que lorsque l'orifice ne se trouve pas exactement au droit du doigt 21A, ce dernier vient en butée contre les bords de l'orifice en question ce qui l'empêche d'atteindre sa position de blocage.

Grâce à la caractéristique de l'invention selon laquelle le verrou 16 est dans sa totalité en correspondance radiale avec la poignée de cuve 3 lorsque le couvercle 5 occupe sa position prédéterminée de pré-verrouillage, il est possible de mettre en oeuvre une collaboration mécanique précoce entre le verrou 16 et la poignée de cuve 3, dans la position de pré-verrouillage du couvercle 5 relativement à la cuve 2, afin par exemple de garantir le maintien, dans cette position de pré-verrouillage, du verrou 16 dans une position interdisant au moyen de sécurité 21 d'atteindre sa position de blocage. À cette fin, il est par exemple possible de mettre en oeuvre une coopération de surfaces de cames portées respectivement par la poignée de cuve 3 et le verrou 16 afin de maintenir ledit verrou 16 dans une position intermédiaire entre ses première et deuxième position, position intermédiaire qui interdit la montée du doigt 21A jusque dans la position haute correspondant à la configuration de blocage. D'autres coopérations sont bien entendu envisageables, par exemple une coopération mécanique entre la poignée de cuve 3 et le corps principal 13 pour interagir directement ou indirectement avec le moyen de sécurité 21.

## Revendications

1. Appareil de cuisson d'aliments (1) sous pression comportant une cuve (2) munie d'une poignée de cuve (3) qui forme une excroissance locale s'étendant radialement à partir de la cuve (2), un couvercle (5) indépendant de la cuve (2), ainsi qu'un système de verrouillage à baïonnette conçu pour passer d'une configuration de déverrouillage à une configuration de verrouillage par pivotement du couvercle (5) relativement à la cuve (2) selon une course angulaire (a) prédéterminée à partir d'une position prédéterminée de pré-verrouillage du couvercle (5) relativement à la cuve (2), pour amener le couvercle (5) dans une position prédéterminée de verrouillage relativement à la cuve (2), ledit appareil (1) comprenant également un élément de sécurité (12) fixé au couvercle (5) pour se déplacer avec ce dernier relativement à la cuve (2) selon ladite course angulaire (a) prédéterminée, ledit élément de sécurité (12) coopérant en interverrouillage avec la poignée de cuve (3) lorsque le couvercle (5) occupe ladite position prédéterminée de verrouillage, ledit appareil (1) étant **caractérisé en ce que** ledit élément de sécurité (12) comprend un corps principal (13) attaché de façon fixe au couvercle (5), ainsi qu'un verrou (16) monté mobile relativement audit corps principal (13) entre :
- une première position dans laquelle ledit verrou (16) peut engager, lorsque le couvercle (5) occupe ladite position prédéterminée de verrouillage, une conformation complémentaire (17) de verrouillage portée par la poignée de cuve (3),
- et une deuxième position dans laquelle le verrou (16) est suffisamment écarté de ladite conformation complémentaire (17) de verrouillage pour se dégager de cette dernière lorsque le couvercle (5) occupe ladite position prédéterminée de verrouillage,
la totalité dudit verrou (16) étant en correspondance radiale avec ladite poignée de cuve (3) non seulement lorsque le couvercle (5) occupe ladite position prédéterminée de verrouillage, mais également lorsqu'il occupe ladite position prédéterminée de pré-verrouillage.

2. Appareil (1) selon la revendication 1 **caractérisé en ce que** la totalité dudit corps principal (13) est également en correspondance radiale avec ladite poignée de cuve (3) non seulement lorsque le couvercle (5) occupe ladite position prédéterminée de verrouillage, mais également lorsqu'il occupe ladite position prédéterminée de pré-verrouillage.

3. Appareil (1) selon la revendication 1 ou 2 **caractérisé en ce que** ladite course angulaire prédéterminée (α) est inférieure à 30°, par exemple comprise entre 10° et 25°.

4. Appareil (1) selon l'une des revendications 1 à 3 **caractérisé en ce que** ladite première position est une position déployée dans laquelle une portion dudit verrou (16) déborde radialement dudit corps principal (13) pour engager ladite conformation complémentaire (17) de verrouillage, tandis que ladite deuxième position est une position escamotée dans laquelle ladite portion du verrou (16) est rétractée vers l'intérieur du couvercle (5) pour se dégager de ladite conformation complémentaire (17) de verrouillage.

5. Appareil (1) selon l'une des revendications 1 à 4 **caractérisé en ce que** ledit élément de sécurité (12) comprend un moyen de rappel élastique (19) interposé entre lesdits corps principal (13) et verrou (16) pour rappeler en permanence ledit verrou (16) dans sa première position, ou pour rappeler en permanence ledit verrou (16) dans sa deuxième position.

6. Appareil selon l'une des revendications 1 à 5 **caractérisé en ce que** ledit élément de sécurité (12) comprend un organe de commande (20) déplaçable manuellement relativement audit corps principal (13) pour commander manuellement le déplacement du verrou (16) de sa première à sa deuxième position et/ou de sa deuxième à sa première position.

7. Appareil (1) selon l'une des revendications 1 à 6 **caractérisé en ce que** dans sa première position, ledit verrou (16) s'étend longitudinalement entre une extrémité intérieure (16A) au contact du corps principal (13) et une extrémité extérieure libre (16B), ladite conformation complémentaire (17) formant un logement destiné à recevoir en son sein ladite extrémité extérieure libre (16 B) lorsque lesdits verrou (16) et couvercle (5) occupent respectivement lesdites première position et position prédéterminée de verrouillage.

8. Appareil (1) selon l'une des revendications 1 à 6 **caractérisé en ce que** ladite conformation complémentaire (17) forme une protubérance de blocage qui fait saillie à la surface de la poignée de cuve (3), ledit verrou (16) formant quant à lui un logement (18) destiné à recevoir ladite protubérance de blocage lorsque lesdits verrou (16) et couvercle (5) occupent respectivement lesdites première position et position prédéterminée de verrouillage.

9. Appareil (1) selon l'une des revendications 1 à 8 **caractérisé en ce que** lorsqu'il occupe sa première position, la totalité dudit verrou (16) surplombe ladite poignée de cuve (3) lorsque le couvercle (5) occupe ladite position prédéterminée de pré-verrouillage.

10. Appareil (1) selon l'une des revendications 1 à 9 **caractérisé en ce que** ladite poignée de cuve (3) s'étend entre des premier et deuxième plan verticaux (P3, P4), ledit verrou (16) s'étendant lui aussi entre lesdits premier et deuxième plans verticaux (P3, P4) non seulement lorsque ledit couvercle (5) occupe ladite position prédéterminée de verrouillage, mais également lorsque ledit couvercle (5) occupe ladite position prédéterminée de pré-verrouillage.

11. Appareil (1) selon l'une des revendications 1 à 10 **caractérisé en ce que** ledit verrou (16) s'étend entre des troisième et quatrième plans verticaux (P5, P6), chacun desdits troisième et quatrième plans verticaux croisant la poignée de cuve (3) non seulement lorsque ledit couvercle (5) occupe ladite position prédéterminée de verrouillage, mais également lorsque ledit couvercle (5) occupe ladite position prédéterminée de pré-verrouillage.

12. Appareil (1) selon la revendication 10 **caractérisé en ce que** le corps principal (13) s'étend latéralement entre des cinquième et sixième plans verticaux (P7, P8) qui s'étendent entre lesdits premier et deuxième plans verticaux (P3, P4), que le couvercle (5) occupe sa position de pré-verrouillage ou sa position de verrouillage.

13. Appareil (1) selon l'une des revendications 1 à 12 **caractérisé en ce qu'**il comprend un organe de préhension (15) qui est attaché de façon fixe au couvercle (5) et est conçu pour être saisi manuellement afin de permettre la manipulation et le transport du couvercle (5) par son intermédiaire.

14. Appareil (1) selon l'une des revendications 1 à 13 **caractérisé en ce que** ledit corps principal (13) vient de matière avec ledit organe de préhension (15).

15. Appareil (1) selon l'une des revendications 1 à 14 **caractérisé en ce qu'**il est conçu pour être soumis à une source de chauffe externe, comme par exemple une plaque de cuisson.

## Patentansprüche

1. Gerät (1) zum Garen von Nahrungsmitteln unter Druck, umfassend einen Behälter (2), der mit einem Behältergriff (3) versehen ist, der einen lokalen Vorsprung bildet, der sich von dem Behälter (2) radial erstreckt, einen Deckel (5), der von dem Behälter (2) unabhängig ist, und ein Bajonettverschluss-System, das ausgelegt ist, um durch Schwenken des Deckels (5) in Bezug auf den Behälter (2) gemäß einem vorbestimmten Winkelhub (a) aus einer vorbestimmten Vorverriegelungsposition des Deckels (5) in Bezug auf den Behälter (2) von einer Entriegelungskonfiguration in eine Verriegelungskonfiguration überzugehen, um den Deckel (5) in eine vorbestimmte Verriegelungsposition in Bezug auf den Behälter (2) zu bringen, wobei das Gerät (1) auch ein Sicherheitselement (12) aufweist, das an dem Deckel (5) befestigt ist, um mit diesem Letzteren in Bezug auf den Behälter (2) gemäß dem vorbestimmten Winkelhub (a) bewegt zu werden, wobei das Sicherheitselement (12) ineinandergreifend mit dem Behältergriff (3) zusammenwirkt, wenn der Deckel (5) die vorbestimmte Verriegelungsposition einnimmt, wobei das Gerät (1) **dadurch gekennzeichnet ist, dass** das Sicherheitselement (12) einen Hauptkörper (13), der fest an dem Deckel (5) angebracht ist, und einen Riegel (16) aufweist, der in Bezug auf den Hauptkörper (13) beweglich befestigt ist zwischen:
- einer ersten Position, in der der Riegel (16) in einer komplementären Verriegelungskonformation (17), die von dem Behältergriff (3) getragen ist, einrasten kann, wenn der Deckel (5) die vorbestimmte Verriegelungsposition einnimmt,
- und einer zweiten Position, in der der Riegel (16) ausreichend von der komplementären Verriegelungskonformation (17) entfernt ist, um sich aus dieser Letzteren zu lösen, wenn der Deckel (5) die vorbestimmte Verriegelungsposition einnimmt,
wobei sich der gesamte Riegel (16) nicht nur in radialer Übereinstimmung mit dem Behältergriff (3) befindet, wenn der Deckel (5) die vorbestimmte Verriegelungsposition einnimmt, sondern auch, wenn er die vorbestimmte Vorverriegelungsposition einnimmt.

2. Gerät (1) nach Anspruch 1, **dadurch gekennzeichnet, dass** sich auch der gesamte Hauptkörper (13) nicht nur in radialer Übereinstimmung mit dem Behältergriff (3) befindet, wenn der Deckel (5) die vorbestimmte Verriegelungsposition einnimmt, sondern auch, wenn er die vorbestimmte Vorverriegelungsposition einnimmt.

3. Gerät (1) nach Anspruch 1 oder 2, **dadurch gekennzeichnet, dass** der vorbestimmte Winkelhub (a) kleiner als 30° ist, beispielsweise zwischen 10° und 25° beträgt.

4. Gerät (1) nach einem der Ansprüche 1 bis 3, **dadurch gekennzeichnet, dass** die erste Position eine ausgefahrene Position ist, in der ein Abschnitt des Riegels (16) radial über den Hauptkörper (13) hinausragt, um in der komplementären Verriegelungskonformation (17) einzurasten, während die zweite Position eine eingefahrene Position ist, in der der Abschnitt des Riegels (16) zum Inneren des Deckels (5) zurückgezogen ist, um sich aus der komplementären Verriegelungskonformation (17) zu lösen.

5. Gerät (1) nach einem der Ansprüche 1 bis 4, **dadurch gekennzeichnet, dass** das Sicherheitselement (12) ein elastisches Rückstellmittel (19) aufweist, das zwischen dem Hauptkörper (13) und dem Riegel (16) angeordnet ist, um den Riegel (16) ständig in seine erste Position zurückzustellen oder um den Riegel (16) ständig in seine zweite Position zurückzustellen.

6. Gerät nach einem der Ansprüche 1 bis 5, **dadurch gekennzeichnet, dass** das Sicherheitselement (12) ein Steuerorgan (20) aufweist, das in Bezug auf den Hauptkörper (13) manuell verschiebbar ist, um das Verschieben des Riegels (16) von seiner ersten Position in seine zweite Position und/oder von seiner zweiten Position in seine erste Position manuell zu steuern.

7. Gerät (1) nach einem der Ansprüche 1 bis 6, **dadurch gekennzeichnet, dass** sich der Riegel (16) in seiner ersten Position in Längsrichtung zwischen einem inneren Ende (16A) in Kontakt mit dem Hauptkörper (13) und einem freien äußeren Ende (16B) erstreckt, wobei die komplementäre Konformation (17) eine Aufnahme bildet, die dazu bestimmt ist, in sich das freie äußere Ende (16B) aufzunehmen, wenn der Riegel (16) und der Deckel (5) jeweils die erste Position und die vorbestimmte Verriegelungsposition einnehmen.

8. Gerät (1) nach einem der Ansprüche 1 bis 6, **dadurch gekennzeichnet, dass** die komplementäre Konformation (17) einen Blockiervorsprung bildet, der an der Oberfläche des Behältergriffs (3) vorsteht, wobei der Riegel (16) seinerseits eine Aufnahme (18) bildet, die dazu bestimmt ist, den Blockiervorsprung aufzunehmen, wenn der Riegel (16) und der Deckel (5) jeweils die erste Position und die vorbestimmte Verriegelungsposition einnehmen.

9. Gerät (1) nach einem der Ansprüche 1 bis 8, **dadurch gekennzeichnet, dass** der gesamte Riegel (16), wenn er seine erste Position einnimmt, über den Behältergriff (3) hinausragt, wenn der Deckel (5) seine vorbestimmte Vorverriegelungsposition einnimmt.

10. Gerät (1) nach einem der Ansprüche 1 bis 9, **dadurch gekennzeichnet, dass** sich der Behältergriff (3) zwischen einer ersten und einer zweiten vertikalen Ebene (P3, P4) erstreckt, wobei sich der Riegel (16) seinerseits nicht nur zwischen der ersten und der zweiten vertikalen Ebene (P3, P4) erstreckt, wenn der Deckel (5) die vorbestimmte Verriegelungsposition einnimmt, sondern auch, wenn der Deckel (5) die vorbestimmte Vorverriegelungsposition einnimmt.

11. Gerät (1) nach einem der Ansprüche 1 bis 10, **dadurch gekennzeichnet, dass** sich der Riegel (16) zwischen einer dritten und einer vierten vertikalen Ebene (P5, P6) erstreckt, wobei jede der dritten und der vierten vertikalen Ebene den Behältergriff (3) nicht nur durchkreuzt, wenn der Deckel (5) die vorbestimmte Verriegelungsposition einnimmt, sondern auch, wenn der Deckel (5) die vorbestimmte Vorverriegelungsposition einnimmt.

12. Gerät (1) nach Anspruch 10, **dadurch gekennzeichnet, dass** sich der Hauptkörper (13) seitlich zwischen der fünften und der sechsten vertikalen Ebene (P7, P8) erstreckt, die sich zwischen der ersten und der zweiten vertikalen Ebene (P3, P4) erstrecken, dass der Deckel (5) seine Vorverriegelungsposition oder seine Verriegelungsposition einnimmt.

13. Gerät (1) nach einem der Ansprüche 1 bis 12, **dadurch gekennzeichnet, dass** es ein Greiforgan (15) aufweist, das fest an dem Deckel (5) angebracht ist und ausgelegt ist, um manuell ergriffen zu werden, um das Handhaben und das Transportieren des Deckels (15) durch dieses zu ermöglichen.

14. Gerät (1) nach einem der Ansprüche 1 bis 13, **dadurch gekennzeichnet, dass** der Hauptkörper (13) werkstoffsmäßig einstückig mit dem Greiforgan (15) hergestellt ist.

15. Gerät (1) nach einem der Ansprüche 1 bis 14, **dadurch gekennzeichnet, dass** es ausgelegt ist, um einer äußeren Wärmequelle, wie beispielsweise einer Kochplatte, ausgesetzt zu werden.

## Claims

1. The food pressure cooking appliance (1) including a bowl (2) provided with a bowl handle (3) that forms a local protrusion extending radially from the bowl (2), a lid (5) independent of the bowl (2), as well as a bayonet locking system designed to switch from an unlocking configuration to a locking configuration by swivelling of the lid (5) with respect to the bowl (2) according to a predetermined angular stroke (α) from a predetermined pre-locking position of the lid (5) with respect to the bowl (2), to bring the lid (5) to a predetermined locking position with respect to the bowl (2), said appliance (1) also comprising a safety element (12) fixed to the lid (5) to move with the latter with respect to the bowl (2) according to said predetermined angular stroke (α), said safety element (12) cooperating in interlocking with the bowl handle (3) when the lid (5) occupies said predetermined locking position, said appliance (1) being **characterized in that** said safety element (12) comprises a main body (13) fixedly attached to the lid (5), as well as a lock (16) mounted mobile with respect said the main body (13) between:
- a first position in which said lock (16) can engage, when the lid (5) occupies said predetermined locking position, a complementary locking conformation (17) carried by the bowl handle (3),
- and a second position in which the lock (16) is spaced apart enough from said complementary locking conformation (17) to disengage from the latter when the lid (5) occupies said predetermined locking position,
the totality of said lock (16) being in radial correspondence with said bowl handle (3), not only when the lid (5) occupies said predetermined locking position, but also when it occupies said predetermined pre-locking position.

2. The appliance (1) according to claim 1, **characterized in that** the totality of said main body (13) is also in radial correspondence with said bowl handle (3) not only when the lid (5) occupies said predetermined locking position, but also when it occupies said predetermined pre-locking position.

3. The appliance (1) according to claim 1 or 2, **characterized in that** said predetermined angular stroke (α) is lower than 30°, for example comprised between 10° and 25°.

4. The appliance (1) according to one of claims 1 to 3, **characterized in that** said first position is an extended position in which a portion of said lock (16) radially protrudes from said main body (13), to engage said complementary locking conformation (17), whereas said second position is a retracted position in which said portion of the lock (16) is retracted towards the inside of the lid (5) to disengage from said complementary locking conformation (17).

5. The appliance (1) according to one of claims 1 to 4, **characterized in that** said safety element (12) comprises an elastic return means (19) interposed between said main body (13) and lock (16) to permanently return said lock (16) to its first position, or to permanently return said lock (16) to its second position.

6. The appliance (1) according to one of claims 1 to 5, **characterized in that** said safety element (12) comprises a control member (20) that is manually moveable with respect to said main body (13) to control manually the displacement of the lock (16) from its first to its second position and/or from its second to its first position.

7. The appliance (1) according to one of claims 1 to 6, **characterized in that**, in its first position, said lock (16) extends longitudinally between an inner end (16A) in contact with the main body (13) and a free outer end (16B), said complementary conformation (17) forming an accommodation intended to receive said free outer end (16B) when said lock (16) and lid (5) occupy said first position and said predetermined locking position, respectively.

8. The appliance (1) according to one of claims 1 to 6, **characterized in that** said complementary conformation (17) forms a blocking protuberance that protrudes at the surface of the bowl handle (3), said lock (16) forming an accommodation (18) intended to receive said blocking protrusion when said lock (16) and lid (5) occupy said first position and said predetermined locking position, respectively.

9. The appliance (1) according to one of claims 1 to 8, **characterized in that**, when it occupies its first position, the totality of said lock (16) overhangs said bowl handle (3) when the lid (5) occupies said predetermined pre-locking position.

10. The appliance (1) according to one of claims 1 to 9, **characterized in that** said bowl handle (3) extends between first and second vertical planes (P3, P4), said lock (16) also extending between said first and second vertical planes (P3, P4), not only when said lid (5) occupies said predetermined locking position, but also when said lid (5) occupies said predetermined pre-locking position.

11. The appliance (1) according to one of claims 1 to 10, **characterized in that** said lock (16) extends between third and fourth vertical planes (P5, P6), each of the third and fourth vertical planes crossing the bowl handle (3) not only when said lid (5) occupies said predetermined locking position, but also when said lid (5) occupies said predetermined pre-locking position.

12. The appliance (1) according to claim 10, **characterized in that** the main body (13) extends laterally between fifth and sixth vertical planes (P7, P8) that extend between said first and second vertical planes (P3, P4), whether the lid (5) occupies its pre-locking position or its locking position.

13. The appliance (1) according to one of claims 1 to 12, **characterized in that** it comprises a gripping member (15) that is fixedly attached to the lid (5) and that is designed to be manually gripped in order to allow the handling and the transport of the lid (5) by means of it.

14. The appliance (1) according to one of claims 1 to 13, **characterized in that** said main body (13) is single-piece with said gripping member (15).

15. The appliance (1) according to one of claims 1 to 14, **characterized in that** it is designed to be subjected to an external heating source, as for example a cooking plate.
